(19) Europäisches Patentamt
European Patent Office
Office européen des brevets

(11) **EP 2 202 561 A1**

(12) **EUROPEAN PATENT APPLICATION**

(43) Date of publication:
**30.06.2010 Bulletin 2010/26**

(51) Int Cl.:
***G02C 7/02*** (2006.01)

(21) Application number: **08306016.0**

(22) Date of filing: **24.12.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Moine, Jérôme**<br>  **94220 CHARENTON LE PONT (FR)**<br>• **Sahler, Jean**<br>  **94220 CHARENTON LE PONT (FR)** |
| (71) Applicant: **Essilor International**<br>**(Compagnie Générale D'Optique)**<br>**94220 Charenton le Pont (FR)** | (74) Representative: **Cabinet Plasseraud**<br>**52, rue de la Victoire**<br>**75440 Paris Cedex 09 (FR)** |

(54) **A lens customizing method**

(57) Method for customizing an initial ophthalmic lens, the initial ophthalmic lens being customized so as to provide a customized ophthalmic lens, the method comprising:

○ a initial ophthalmic lens data providing step (S1) in which initial data representing the initial ophthalmic lens is provided;

○ a constraint data providing step (S2) in which constraint data comprises at least the outline, the minimum thickness at the optical centre and the minimum thickness at the edges of the initial ophthalmic lens;

○ a prism determining step (S3) in which the prism to be applied to the initial ophthalmic lens so as to minimize the difference between the value of the chosen geometrical parameter of the customized ophthalmic lens and a desired value of the chosen geometrical parameter is determined, wherein

■ the angle of the prism is smaller than or equal to 10˚; and

■ the customized ophthalmic lens fulfils the same constraint as the initial ophthalmic lens.

FIG.2.

**Description**

The invention relates to a method for customizing an initial ophthalmic lens and to a method of manufacturing a customized ophthalmic lens.

The process of designing an ophthalmic lens comprises determining the geometrical and optical parameters of the ophthalmic lens. The geometrical and optical parameters of the ophthalmic lens typically depend on the wearer's prescription. Indeed, conventionally the optical performance of the ophthalmic lens is the main criteria when designing an ophthalmic lens.

However, recently esthetic criteria have become more and more important when designing an ophthalmic lens. In particular, reducing the thickness and the weight of ophthalmic lens has become an issue.

The issue of the thickness and the weight reduction may be illustrated in the case of progressive addition lenses.

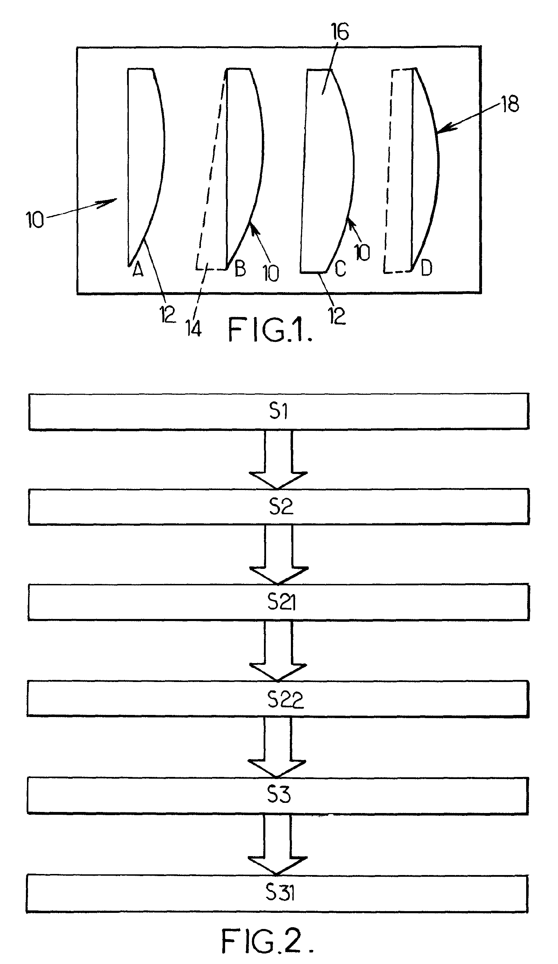

Conventionally, in a progressive addition lens, the curvature of the surface gradually increases towards the bottom of the lens as illustrated in fig 1a. The increase in curvature is what produces the add power of a progressive addition lens. Unfortunately, because the bottom of the lens is steeper than the top of the lens, the upper edge of a progressive lens blank is thicker than the lower edge.

Such lens geometry requires a greater center thickness in order to provide the same minimum edge thickness in the near vision zone.

Typically, to minimize the excess thickness and weight of ophthalmic lenses, for example of progressive addition lenses, a prism thinning method is used.

Typically, prism thinning is accomplished during the generating process by literally tilting the front surface of the lens on the chuck of conventional generators, using a prism ring. When the back surface is ground normally, the surfaced lens is left with a prismatic effect at the centre.

Prism thinning may be applied to a progressive addition lens to reduce the thickness and weight of the progressive addition lens as illustrated in Figure 1.

Figure 1a illustrates a progressive addition lens 10 with no prism thinning. To create additional plus power, the curvature of a progressive lens increases at the bottom 12 of the progressive addition lens 10. In order to be fit into a spectacle frame, the progressive addition lens 10 must have some thickness over a certain diameter, for example the lens must be thick enough to provide a lens diameter large enough to be edged down to the spectacle frame shape.

The progressive addition lens 10 represented on fig 1a. cannot be ground any thinner, because any reduction in thickness would decrease the lens area at the bottom 12 of the progressive addition lens 10 and the progressive addition lens 10 would not be large enough to support the spectacle frame size.

By adding a base down prism 14 to the progressive addition lens 10, as illustrated on fig 1b, the thickness between the top and bottom is equalized.

According to widely used example, the amount of base down prism used to thin the progressive addition lens is equal to about 2/3 of the power of the addition. Therefore, a progressive addition lens with a +3 addition would have 2 diopter of base down prism to thin the progressive addition lens.

Fig. 1c illustrates the combination of the base down prism 14 and the original progressive addition lens shape. Because the top 16 and bottom 12 of the progressive addition lens are of equal thickness, the entire progressive addition lens 10 may be ground thinner without reducing the diameter of the progressive addition lens 10.

The result is a thinner and/or lighter lens 19 illustrated in fig. 1d, that is more cosmetically appealing and comfortable.

Prism thinning is generally considered a cosmetic element of the finished ophthalmic lens; it is rarely prescribed.

The inventors have observed that the choice for the value of the prism of 2/3 of the power of the addition may not always be the best choice. In particular, in certain condition the choice of 2/3 of the power of the addition may lead to a final progressive addition lens ticker and heavier than if no prism was applied.

The inventors have observed that depending on the position of the progressive addition lens, for example the position of the optical centre of the progressive addition lens, in a spectacle frame the choice of 2/3 of the power could lead to an increase in the volume of the progressive addition lens.

Therefore, it appears that the value of 2/3 of the power of the addition for the base down prism to apply to a progressive addition lens so as to reduce the thickness may not always be the best value.

In the past, emphasis has been placed on reducing the thickness of the ophthalmic lens. However it appears that wearers may wish to control other geometrical parameters of the ophthalmic lens. For such other geometrical parameter no rule such as choosing 2/3 of the power of the addition exists.

Accordingly, there remains a need for improving the determination of the value of the prism to apply to an ophthalmic lens. Thus, the goal of the present invention is to improve the present situation.

The invention relates to a method for customizing an initial ophthalmic lens so as to provide a customized ophthalmic lens, the method comprising:

○ a initial ophthalmic lens data providing step in which initial data representing the initial ophthalmic lens is provided;
○ a constraint data providing step in which constraint data comprises at least the outline, the minimum thickness at the optical centre and the minimum thickness at the edges of the initial ophthalmic lens;
○ a prism determining step in which the prism to be applied to the initial ophthalmic lens so as to minimize the difference between the value of the chosen geometrical parameter of the customized ophthalmic lens and a desired value of the chosen geometrical parameter is determined, wherein

■ the angle of the prism is smaller than or equal to 10˚; and
■ the customized ophthalmic lens fulfils the same constraint as the initial ophthalmic lens.

According to the method of customizing of the invention, the prism to be applied to the initial ophthalmic lens is determined not only by the power of the initial ophthalmic lens but also according to the constraint data and to the desired value of the chosen geometrical parameter.

According to further embodiments which can be considered alone or in combination:

○ the base of the prism is a vertical prism;
○ the chosen geometrical parameter is the volume and/or the thickness at a given point and/or the difference of thickness between at least two given points and/or the difference of thickness of the edges;
○ the constraint data comprises the edging parameter of the initial ophthalmic lens so as to be mounted in a chosen spectacle frame and/or the minimum thickness in at least one point of the initial ophthalmic lens and/or the position of the fitting cross in a chosen spectacle frame;
○ the initial ophthalmic lens is a progressive additional lens;
○ the angle of the prism is smaller than or equal to 5˚, for example smaller than or equal to 3˚;
○ the prism determining step comprises determining the value of the chosen geometrical parameter of the customized ophthalmic lens for different angles and/or orientation of the base of the prism and selecting the angle and/or the orientation of the base for which the difference between the value of the chosen geometrical parameter and the desired value of the chosen geometrical parameter is the smallest;
○ the method further comprises:

■ a threshold value providing step in which a threshold value of the difference of value of the chosen geometrical parameter between the initial ophthalmic lens and the customized ophthalmic lens is provided,
■ and wherein if the difference of value of the chosen geometrical parameter between the initial ophthalmic lens and the customized ophthalmic lens is smaller than or equal to the threshold value, the value of the chosen geometrical parameter is not taken in consideration when determining the prism to be applied to the initial ophthalmic lens.

According to another aspect, the invention relates also to a method of manufacturing an ophthalmic lens, the method comprising:

■ an order request step in which an order request comprising at least the wearer prescription is provided,

■ an initial ophthalmic lens determining step in which the design and optical parameters of an initial ophthalmic lens is determined according to the data comprised in the order request,

■ a customizing step in which the initial ophthalmic lens is customized according to the invention,

■ a manufacturing step in which the customized ophthalmic lens is manufactured.

The invention further relates to a method of customizing a pair of initial ophthalmic lenses, each initial ophthalmic lens being customized according the invention, so as to provide a pair of customized ophthalmic lenses having a desired value of a chosen geometrical parameter and the same prism.

According to another aspect, the invention relates also toll a method of manufacturing a pair of ophthalmic lenses, the method comprising:

■ an order request step in which an order request comprising at least the wearer prescription is provided,

■ a pair of initial ophthalmic lenses determining step in which the design and optical parameters of a pair of initial ophthalmic lenses is determined according to the data comprised in the order request,

■ a customizing step in which the pair of initial ophthalmic lenses is customized according the invention,

■ a manufacturing step in which the pair of customized ophthalmic lenses is manufactured.

The invention also relates to a computer program product for a data processing device, the computer program product comprising a set of instructions which, when loaded into the data processing device, causes the data processing device to perform at least one, for example all, of the steps, for example the calculating step, of the method according to the invention.

In addition, the present invention provides a computer-readable medium carrying one or more set of instructions of a computer program product of the invention.

In the sense of the invention the wording "ophthalmic lens" refers to a lens that may comprise a spheric or aspheric or toric or atoric front face and a spheric or aspheric or toric or atoric rear face.

In the sense of the invention the wording "prism" refers to a refracting element bounded by two nonparallel plane surfaces. The "angle of a prism" corresponds to the angle included between the refracting surfaces and which is contained in a principal section of the prism. The base of a prism corresponds to the thickest part of the principal section of the prism.

In the sense of the invention the wording "determining the prism" refers to determining the orientation of the base of the prism and the value of the prism in diopter or the angle of the prism. To generate a deviation of z diopter with a vertical prism of optical index n, the angle $\alpha$ of the vertical prism must be of:

$$\alpha = 1 / (n-1) \times \arctan(z/100).$$

In the sense of the invention, the setting position for the prism base may be indicated by the directions 'base up' or 'base down' or 'in' (towards the nose) or 'out' (towards the temples). The base setting may also be indicated by the angular coordinate system specified in international standard ISO 8429.

In the sense of the invention the wording "vertical prism" refers to a prism with a base orientated at about 90° or 270°.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer or Very high speed integrated circuit Hardware Description Language ("VHDL"), or Complex Instruction Set Computer ("CISC") architecture, for example X 86, or Reduced Instruction Set Computer ("RISC") architecture, for example ARM.

Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Non limiting embodiments of the invention will now be described with reference to the accompanying drawing wherein:

- Fig. 1 is a schematic representation of ophthalmic lenses with and without a vertical prism;
- Fig. 2 is a flowchart of the steps comprised in a method of customizing an ophthalmic lens according to an embodiment of the invention;
- Fig 3 represents examples of outlines of a ophthalmic lens.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

According to an embodiment of the invention the method for customizing an initial ophthalmic comprises:

○ a initial ophthalmic lens data providing step S1 in which initial data representing the initial ophthalmic lens is provided;
○ a constraint data providing step S2 in which constraint data comprises at least the outline, the minimum thickness at the optical centre and the minimum thickness at the edges of the initial ophthalmic lens;
○ a prism determining step S3 in which the prism to be applied to the initial ophthalmic lens so as to minimize the difference between the value of the chosen geometrical parameter of the customized ophthalmic lens and a desired value of the chosen geometrical parameter is determined, wherein

■ the angle of the prism is smaller than or equal to 10˚; and
■ the customized ophthalmic lens fulfils the same constraint as the initial ophthalmic lens.

Advantageously, the method according to the invention allows obtaining a customized ophthalmic lens having the value of a chosen geometrical parameter as close as possible to the desired value of said chosen geometrical parameter. Unlike the prior art, where the prism is determined only to reduce the volume of the ophthalmic lens and exclusively according to the power of the ophthalmic lens, for example 2/3 of the power of addition in the case of a progressive addition lens, according to the invention, the prism is determined according to the desired value of the geometrical parameter and the constraints.

The chosen geometrical parameter may be the volume and/or the thickness at a given point and/or the difference of thickness between at least two given points and/or the difference of thickness of the edges and/or any other geometrical parameter the wearer can chose. For example, the thickness at the prism reference point.

However, the desired value of the chosen geometrical parameter should be consistent with the constraint data.

According to an embodiment of the invention, the method may further comprise a consistent step S21 in which the consistency of the desired value of the chosen geometrical parameter with the constraint data is checked. If the desired value of the chosen geometrical parameter is not consistent with the constraint data, the prism is determined so as to minimize the absolute value of the difference between the value of the chosen geometrical parameter of the customized lens and the desired value of the chosen geometrical parameter.

Furthermore, according to an embodiment of the invention a warning message may be returned.

According to different embodiments of the invention the initial ophthalmic lens may be a progressive addition lens, for example a front face progressive addition lens, or a rear face progressive addition lens or a double progressive addition lens or a trifocal lens, or a bifocal lens or a single vision lens.

According to an embodiment of the invention, the initial data may comprise data that define the initial ophthalmic lens according to the prescription of the wearer. The initial data may be determined by well known method such as ray tracing or optimization.

The constraint data comprise at least the outline, the minimum thickness at the optical centre and the minimum thickness at the edges of the initial ophthalmic lens.

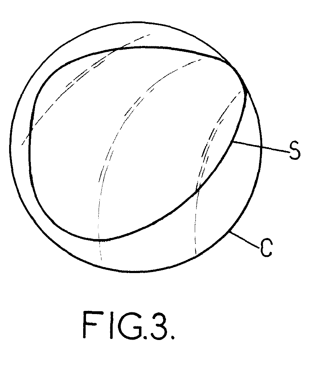

The outline shall represent the shape of the contour of the ophthalmic lens. As illustrated on fig. 3, the outline may be for example a circle C, or the shape S of the contour of the ophthalmic lens when edged so as to be mounted in a given spectacle frame for a given wearer.

According to an embodiment of the invention, the constraint data may be determined according to a chosen spectacle frame and morphology data of the wearer. Indeed, the choice of the spectacle frame determines the outline of the initial ophthalmic lens. The wearer, in particular the wearer's morphology, may determine the position of the optical center when the final lens is to be mounted in the spectacle frame.

Furthermore, the constraint data may comprise the edging parameter of the initial ophthalmic lens so as to be mounted in a chosen spectacle frame and/or the minimum thickness in at least one point of the initial ophthalmic lens and/or the position of the fitting cross in a chosen spectacle frame and/or any well known constraint from the skilled person.

For example, if the spectacle frame is a rimless frame, the ophthalmic lens should present a certain thickness at the drilling points.

According to an embodiment of the invention, the angle of the prism is smaller than or equal to 5˚, for example smaller than or equal to 3˚. Advantageously, having a small prism angle reduces the risk of introducing optical aberration to the customized lens.

According to an embodiment of the invention, the prism may be a 'vertical' or 'base up' or 'base down' or 'base in' or 'base out' prism.

According to an embodiment of the invention, the prism determining step S3 may comprise determining the geometrical parameter of the customized ophthalmic lens for different prisms, for example for different values of the angle of a vertical prism.

For example, determining 50 different customized ophthalmic lenses having 50 different value of angle of a vertical prism comprised between 0˚ and 5˚ each 0.1˚.

The constraint data are applied when determined each of the customized ophthalmic lenses. The value of the chosen geometrical parameter is determined for each customized ophthalmic lens.

The angle of the vertical prism of the customized ophthalmic lens for which the difference between the value of the chosen geometrical parameter and the desired value of the chosen geometrical parameter is the smallest is selected.

Advantageously, this solution is easy to implement and considering the calculating process known from the person skilled in the art, this solution may be implemented with reasonable calculation time.

According to an embodiment of the invention, the prism, in particular the angle of the prism, may be determined by expressing the chosen geometrical parameter as a function of the prism. For example, the volume of the customized ophthalmic lens is expressed as a function of the angle of a vertical prism.

The difference between said function and the desired value of the chosen geometrical parameter is minimized, for example by using a derivative method, or the well known method of Gauss Newton.

The prim, for example the value of the angle of the vertical prism, corresponding to the minimum of the difference between the function of the chosen geometrical parameter and the desired value of the chosen geometrical parameter is chosen, under the condition that the customized lens fulfills the same constraints as the initial ophthalmic lens.

Advantageously, the use of said function allows optimizing the prism, for example the value of the angle of the vertical prism, according to the constraint data so as to obtain a value of the chosen geometrical parameter as close as possible to the desired value.

According to an embodiment of the invention, the method may comprise a threshold value providing step S22 in which a threshold value of the difference of value of the chosen geometrical parameter between the initial ophthalmic lens and the customized ophthalmic lens is provided. The threshold value may correspond to a gain of at least 1%, for example at least 2%, for example at least 3%, of the value of the geometrical parameter. For example, the geometrical parameter is the volume of the ophthalmic lens, the threshold value may correspond to the smallest accepted reduction of volume.

The method further comprise a comparison step S31 in which the value of the chosen geometrical parameter of the customized lens is compared with the value of the chosen geometrical parameter of the initial ophthalmic lens. If the absolute value of the difference between the value of chosen geometrical parameter of the customized lens and the value of the chosen geometrical parameter of the initial ophthalmic lens is smaller than or equal to the threshold value, the desired value of the chosen geometrical parameter is not taken in consideration when determining the prism of the ophthalmic lens.

The prism may be determined according to other criteria, for example the addition of the power if the ophthalmic lens is a progressive addition lens.

The invention also relates to a method of customizing a pair of initial ophthalmic lenses, each initial ophthalmic lens being customized according the method of the invention, so as to provide a pair of customized ophthalmic lenses having a desired value of a geometrical parameter and the same prism.

The prism should be the same for both customized ophthalmic lenses of the pair so as to have the prism deviate the image equally and in the same direction for both the right and left eye of the wearer. Advantageously, this allows the presence of the prism to be unnoticed by the wearer.

The invention has been described above with the aid of embodiment without limitation of the general inventive concept; in particular the example of constraint and geometrical parameters are not limited to the examples discussed.

## Claims

1. Method for customizing an initial ophthalmic lens so as to provide a customized ophthalmic lens, the method comprising:

   ○ a initial ophthalmic lens data providing step (S1) in which initial data representing the initial ophthalmic lens is provided;
   ○ a constraint data providing step (S2) in which constraint data comprises at least the outline, the minimum thickness at the optical centre and the minimum thickness at the edges of the initial ophthalmic lens;
   ○ a prism determining step (S3) in which the prism to be applied to the initial ophthalmic lens so as to minimize the difference between the value of the chosen geometrical parameter of the customized ophthalmic lens and a desired value of the chosen geometrical parameter is determined, wherein

■ the angle of the prism is smaller than or equal to 10˚; and
■ the customized ophthalmic lens fulfils the same constraint as the initial ophthalmic lens.

2. The method according to claim 1, wherein the base of the prism is a vertical prism.

3. The method according to claim 1 or 2, wherein the chosen geometrical parameter is the volume and/or the thickness at a given point and/or the difference of thickness between at least two given points and/or the difference of thickness of the edges.

4. The method according to any of the preceding claims, wherein the constraint data comprises the edging parameter of the initial ophthalmic lens so as to be mounted in a chosen spectacle frame and/or the minimum thickness in at least one point of the initial ophthalmic lens and/or the position of the fitting cross in a chosen spectacle frame.

5. The method according to any of the preceding claims, wherein the initial ophthalmic lens is a progressive additional lens.

6. The method according to any of the preceding claims, wherein the angle of the prism is smaller than or equal to 5˚, for example smaller than or equal to 3˚.

7. The method according to any of the preceding claims, wherein the prism determining step (S3) comprises determining the value of the chosen geometrical parameter of the customized ophthalmic lens for different angles and/or orientation of the base of the prism and selecting the angle and/or the orientation of the base for which the difference between the value of the chosen geometrical parameter and the desired value of the chosen geometrical parameter is the smallest.

8. The method according to any of the preceding claims, wherein the method further comprises:

a threshold value providing step (S22) in which a threshold value of the difference of value of the chosen geometrical parameter between the initial ophthalmic lens and the customized ophthalmic lens is provided, and wherein if the difference of value of the chosen geometrical parameter between the initial ophthalmic lens and the customized ophthalmic lens is smaller than or equal to the threshold value, the value of the chosen geometrical parameter is not taken in consideration when determining the prism to be applied to the initial ophthalmic lens.

9. Method of manufacturing an ophthalmic lens, the method comprising:

■ an order request step in which an order request comprising at least the wearer prescription is provided,
■ an initial ophthalmic lens determining step in which the design and optical parameters of an initial ophthalmic lens is determined according to the data comprised in the order request,
■ a customizing step in which the initial ophthalmic lens is customized according to any of claims 1 to 8,
■ a manufacturing step in which the customized ophthalmic lens is manufactured.

10. Method of customizing a pair of initial ophthalmic lenses, each initial ophthalmic lens being customized according the method of any of claims 1 to 8, so as to provide a pair of customized ophthalmic lenses having a desired value of a chosen geometrical parameter and the same prism.

11. Method of manufacturing a pair of ophthalmic lenses, the method comprising:

■ an order request step in which an order request comprising at least the wearer prescription is provided,
■ a pair of initial ophthalmic lenses determining step in which the design and optical parameters of a pair of initial ophthalmic lenses is determined according to the data comprised in the order request,
■ a customizing step in which the pair of initial ophthalmic lenses is customized according to claim 10,
■ a manufacturing step in which the pair of customized ophthalmic lenses is manufactured.

12. A computer program product comprising one or more stored sequence of instruction that is accessible to a processor and which, when executed by the processor, causes the processor to carry out the steps of any of claims 1 to 11.

13. A computer readable medium carrying one or more sequences of instructions of the computer program product of claim 12.

FIG.1.

FIG.2.

FIG.3.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 05 341238 A (ASAHI OPTICAL CO LTD) 24 December 1993 (1993-12-24) * abstract; figures 1-7 * | 1-13 | INV. G02C7/02 |
| X | WO 91/01508 A (RODENSTOCK OPTIK G [DE]) 7 February 1991 (1991-02-07) * page 12, line 23 - page 18, line 34; figures 1-10 * | 1-13 | |
| X | US 5 455 642 A (KATO KAZUTOSHI [JP]) 3 October 1995 (1995-10-03) * column 7, line 6 - column 8, line 55; figures 5,6 * | 1-13 | |
| A | WO 94/04344 A (Q2100 INC [US]) 3 March 1994 (1994-03-03) * page 8, line 7 - page 13, line 27; figures 1-6B * | 1-13 | |
| A | WO 02/088832 A (JOHNSON & JOHNSON VISION CARE [US]) 7 November 2002 (2002-11-07) * page 2, line 14 - page 7, line 26; figures 1-6; examples 1,2 * | 1-13 | TECHNICAL FIELDS SEARCHED (IPC) G02C |

The present search report has been drawn up for all claims

| Place of search | Date of completion of the search | Examiner |
|---|---|---|
| Munich | 25 May 2009 | Bratfisch, Knut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 6016

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2009

| Patent document cited in search report | | Publication date | Patent family member(s) | | Publication date |
|---|---|---|---|---|---|
| JP 5341238 | A | 24-12-1993 | NONE | | |
| WO 9101508 | A | 07-02-1991 | AT | 130443 T | 15-12-1995 |
| | | | AU | 635048 B2 | 11-03-1993 |
| | | | AU | 5941590 A | 22-02-1991 |
| | | | EP | 0437607 A1 | 24-07-1991 |
| | | | ES | 2080164 T3 | 01-02-1996 |
| | | | JP | 4500870 T | 13-02-1992 |
| | | | JP | 3273783 B2 | 15-04-2002 |
| | | | US | 5210553 A | 11-05-1993 |
| US 5455642 | A | 03-10-1995 | DE | 69133517 T2 | 10-08-2006 |
| | | | EP | 0594848 A1 | 04-05-1994 |
| | | | WO | 9212452 A1 | 23-07-1992 |
| WO 9404344 | A | 03-03-1994 | AU | 5005493 A | 15-03-1994 |
| | | | US | 6105925 A | 22-08-2000 |
| | | | US | 5689324 A | 18-11-1997 |
| WO 02088832 | A | 07-11-2002 | AT | 410714 T | 15-10-2008 |
| | | | AU | 2002305263 B2 | 23-11-2006 |
| | | | BR | 0209260 A | 01-02-2005 |
| | | | CA | 2445879 A1 | 07-11-2002 |
| | | | CN | 1585909 A | 23-02-2005 |
| | | | CN | 101082705 A | 05-12-2007 |
| | | | EP | 1412806 A2 | 28-04-2004 |
| | | | JP | 2005503576 T | 03-02-2005 |
| | | | MX | PA03009852 A | 06-12-2004 |
| | | | RU | 2282225 C2 | 20-08-2006 |
| | | | TW | 594099 B | 21-06-2004 |
| | | | US | 6505934 B1 | 14-01-2003 |

EPO FORM P0459

For more details about this annex : see Official Journal of the European Patent Office, No. 12/82